# EUROPEAN PATENT APPLICATION

(11) **EP 1 926 258 A1**
(43) Date of publication of application: **28.05.2008**
(21) Application number: 07021241.0
(22) Date of filing: 31.10.2007
(51) Int. Cl.: H04L 12/56

(54) **Mobile communication system, radio base station device, and congestion control method**

(30) Priority: 24.11.2006 JP 2006316672
(71) Applicant: NEC Corporation, Minato-ku Tokyo (JP)
(72) Inventor: Ishizaki, Ryuichiro, Tokyo 108-8001 (JP)
(74) Representative: Baronetzky, Klaus

(57) **Abstract**

A radio base station device detects congestion on transmission lines between the radio base station and a radio base station controller shared by a plurality of radio communication terminals based on the results of error detection that is carried out for each of the plurality of radio communication terminals and reduces the data rate of radio communication terminals that are selected without regard to which radio communication terminals was the cause of congestion detection.

## Description

This application is based upon and claims the benefit of priority from Japanese patent application No. 2006-316672, filed on November 24, 2006, the disclosure of which is incorporated herein in its entirety by reference.

### Background of the Invention

### 1. Field of the Invention:

The present invention relates to a mobile communication system, and more particularly to a radio base station.

### 2. Description of the Related Art:

HSDPA (High-Speed Downlink Packet Access) is a communication technique for achieving higher speeds in data communication in W-CDMA (Wideband Code Division Multiple Access), and HSDPA specifications have been set by the Third Generation Partnership Project (3GPP).

In high-speed data communication such as HSDPA, the bandwidth used by data frames addressed to a UE (User Equipment) that communicates on an lub (Interface between an RNC and a Node-B) widens. An lub is a transmission line that connects a radio base station and a radio base station controller. A UE is a terminal that is used by a user, and may be, for example, a mobile telephone or a PDA (Personal Digital Assistant). When the bandwidth of a UE cannot be adequately secured on an lub; congestion occurs on the lub. JP-A-2006-174039 discloses a technology, when congestion occurs on an lub, for lowering the data rate of a prescribed number of UE in order from UE having a high data rate.

FIG. 1 is a schematic view showing the configuration of the mobile communication system disclosed in JP-A-2006-174039. The mobile communication system includes radio base station controller 11 and radio base station device 12. Radio base station device 12 and radio base station controller 11 are connected to each other by way of lub 3. JP-A-2006-174039 shows an example in which lub 3 is an ATM (Asynchronous Transfer Mode) circuit.

Radio base station controller 11, connected together with mobile communication exchange 4, receives data frames from mobile communication exchange 4, and stores these data frames in a buffer (not shown). Radio base station controller 12 then transmits the data frames that have been stored in the buffer to radio base station device 12 at a desired data rate. The data rate is the amount of data transmitted per unit time interval.

Radio base station device 12 receives the data frames that have been transmitted from radio base station controller 11 and sends these data frames to UE 5i (i'= 1-j). In addition, radio base station device 12 monitors whether congestion is occurring on lub 3. Radio base station device 12 calculates the proportion of bandwidth that is actually being used with respect to the bandwidth that is being provided on lub 3 as a bandwidth use ratio. More specifically, radio base station device 12 calculates, as the bandwidth use ratio, the proportion of the number of ATM cells actually received per unit time interval with respect to the number of ATM cells transmitted per unit time interval during the maximum rate. Radio base station device 12 then determines that congestion is occurring if the bandwidth use ratio exceeds a prescribed threshold value.

In addition, because CRC (Cyclic Redundancy Check) code information is appended to data frames that are received in UE units from radio base station controller 11, as another method of detecting congestion of lub 3, radio base station device 12 is able to determine whether or not congestion is occurring on lub 3 by measuring the error rate by the CRC error check in UE units.

FIG. 2 is a flow chart showing the operation of the communication system of JP-A-2006-174039 when congestion occurs. Radio base station device 12 monitors whether congestion is occurring on lub 3 (Step 190). If congestion is not occurring on lub 3, radio base station device 12 continues monitoring the congestion on lub 3.

Upon determining that congestion is occurring on lub 3, radio base station device 12 selects a UE having a high data rate and calculates the amount of data rate reduction based on the amount of data stored in radio base station controller 11 (Step 191). Radio base station device 12 then calculates the sum total of the amount of data rate reduction (Step 192).

Radio base station device 12 determines whether the calculated sum total is equal to or greater than a prescribed threshold value (Step 193). If the sum total is less than the prescribed threshold value, radio base station device 12 returns to Step 191, selects the UE having the next highest data rate, and repeats the processes of Step 191 and succeeding steps. If the sum total is equal to or greater than the prescribed threshold value, radio base station device 12 subtracts an amount of reduction that has been calculated for each UE from the data rate of each UE and reports the obtained data rates to radio base station controller 11 (Step 194).

After being notified of the new data rates for each UE from radio base station device 12, radio base station controller 11 transmits data frames to each UE at the new data rate (Step 195).

However, congestion on lub occurs due to the influence of all UE that are currently connected. As a result, such measures as lowering the data rate of the UE, that was the stimulus for the detection of the congestion, by means of a CRC error check or by lowering the data rate of UE having the highest data rates, as in JP-A-2006-174039, regardless of whether these UE, that were engaged in data communication, were equally responsible for the congestion, does not achieve unbiased control over the UE.

### Summary of the Invention:

An exemplary object is to provide a communication system that, when congestion occurs on a transmission line, effects unbiased congestion control in radio communication terminals that share transmission lines, a radio base station device for transmitting by way of radio lines to radio communication terminals data received by way of transmission lines from a radio base station controller ,and a congestion control method for controlling congestion of transmission lines in a mobile communication system for sending data addressed to a plurality of radio communication terminals from a radio base station controller to a radio base station device through transmission lines and for transmitting said data from said radio base station device to each of said radio communication terminals by radio lines.

An exemplary aspect of the invention for achieving the above-described object is a mobile communication system in which data are transmitted to radio communication terminals by way of transmission lines and radio lines; the mobile communication system including:
a radio base station device that is connected to the transmission lines, that is connected to a plurality of the radio communication terminals by the radio lines, that both transmits to each of the plurality of radio communication terminals data addressed to the plurality of radio communication terminals that have been received from the transmission lines shared by the plurality of radio communication terminals and monitors congestion of the transmission lines based on error measurement of the data that have been received from the transmission lines for each of the radio communication terminals, and upon detecting congestion of the transmission lines based on the results of error measurement of data addressed to any of the radio communication terminals, that selects, by a method that does not depend on which radio communication terminal provided the stimulus for detecting the congestion, radio communication terminals for reduction of data rate from among the plurality of radio communication terminals; and
a radio base station controller that is connected to the radio base station device by way of the transmission lines, and that, when transmitting to the radio base station device data addressed to the plurality of radio communication terminals through the transmission lines at a first data rate, reduces the data rate to the radio communication terminals that have been selected by the radio base station device from the first data rate to a second data rate when congestion of the transmission lines has been detected at the radio base station device.

An exemplary aspect of the invention for achieving the above-described object is a radio base station device for transmitting by way of radio lines to radio communication terminals data received by way of transmission lines from a radio base station controller, said radio base station device comprising:
a receiver for receiving data addressed to a plurality of radio communication terminals from said transmission lines that are shared by said plurality of radio communication terminals;
a congestion detector for monitoring congestion of said transmission lines based on error measurement of said data that are received by said receiver for each of said radio communication terminals; and
a bandwidth controller for, upon detecting congestion of said transmission line based on results of error measurement of data addressed to any radio communication terminal in said congestion detector, using a method that does not depend on which radio communication terminal provided the stimulus for detecting said congestion to select radio communication terminals for which data rates are to be reduced from among said plurality of radio communication terminals.

An exemplary aspect of the invention for achieving the above-described object is a congestion control method for controlling congestion of transmission lines in a mobile communication system for sending data addressed to a plurality of radio communication terminals from a radio base station controller to a radio base station device through transmission lines and for transmitting said data from said radio base station device to each of said radio communication terminals by radio lines; said congestion control method comprising:
monitoring congestion of said transmission lines based on error measurement, for each of said radio communication terminals, of said data received by said radio base station device from said transmission lines shared by said plurality of radio communication terminals; upon the detection of congestion of said transmission lines based on results of error measurement of data addressed to any radio communication terminal, selecting radio communication terminals for data rate reduction among said plurality of radio communication terminals by a method that does not depend on which radio communication terminal provided the stimulus for detecting said congestion; and
reducing the data rate to said radio communication terminals that have been selected from a first data rate to a second data rate.

The above and other objects, features, and advantages of the present invention will become apparent from the following description with reference to the accompanying drawings which illustrate examples of the present invention.

### Brief Description of the Drawings:

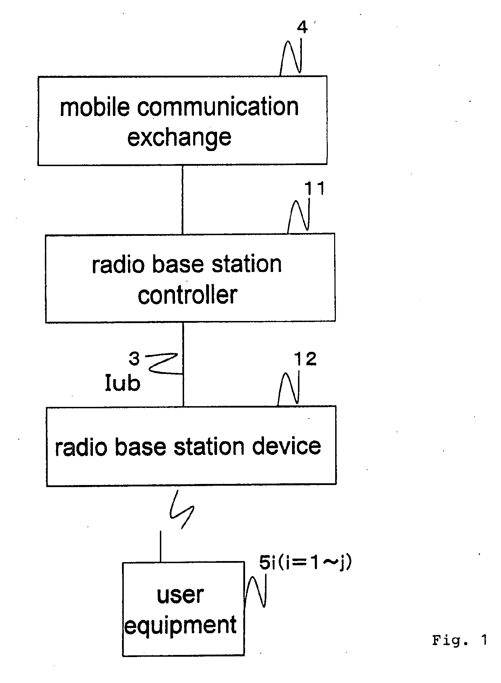

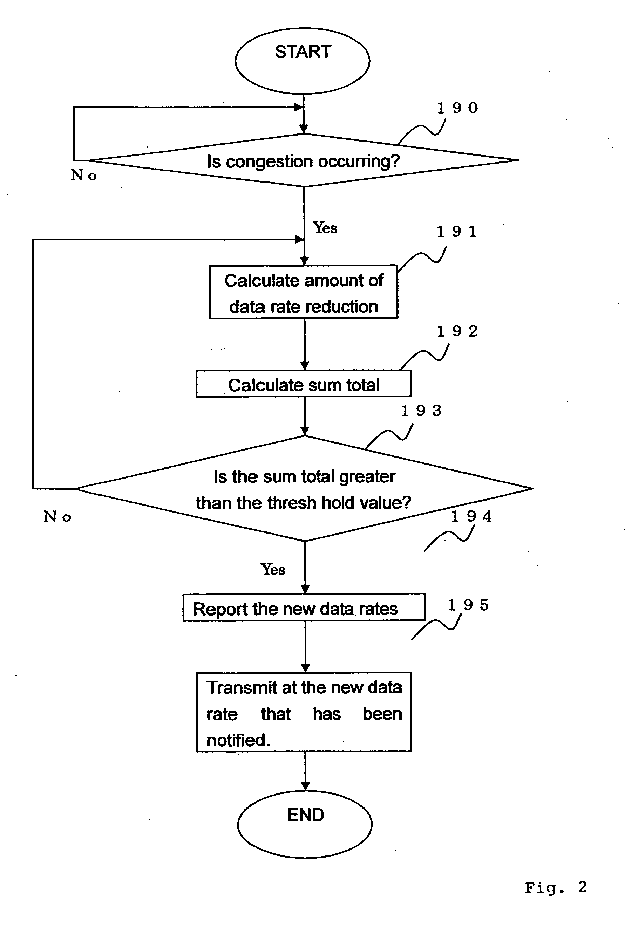

FIG. 1 is a schematic view showing the configuration of a mobile communication system in the publication JP-A-2006-174039;
FIG. 2 is a flow chart showing the operation of the mobile communication system in the publication JP-A-2006-174039 when congestion occurs;
FIG. 3 is a schematic view showing the configuration of a mobile communication system in an exemplary embodiment;
FIG. 4 is a flow chart showing the operation of the mobile communication system in an exemplary embodiment;
FIG. 5 is a block diagram showing the configuration of radio base station device 2 in an exemplary embodiment;
FIG. 6 is a flow chart showing the operation of radio base station device 2 that achieves unbiased control over all portable telephones in an exemplary embodiment; and
FIG. 7 is a flow chart showing the operation of radio base station device 2 that achieves unbiased control over a prescribed number of portable telephones in another embodiment.

### Detailed Description of the Preferred Embodiments:

Explanation next regards the details of an embodiment that shows one implementation of the present invention with reference to the accompanying figures. In exemplary embodiment, i is a serial number appended to portable telephones that are in the process of communicating data with a radio base station device, and j is the total number of portable telephones that are in the process of communicating data with the radio base station device; where i is a natural number equal to or greater than 1 and equal to or less than j.

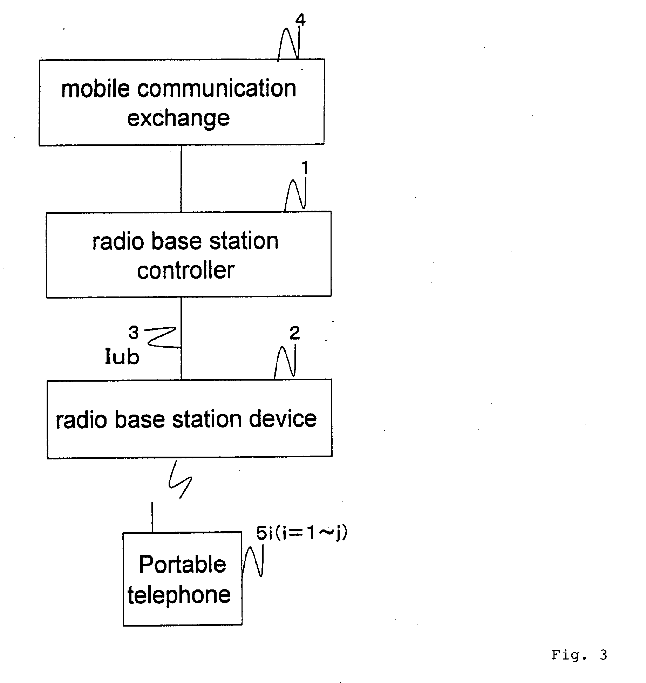

FIG. 3 is a schematic view showing the configuration of a mobile communication system in an exemplary embodiment. The mobile communication system of FIG. 3 includes radio base station controller 1 and radio base station device 2.

Radio base station controller 1 is both interconnected with mobile communication exchange 4 and interconnected by way of lub 3 with radio base station device 2. Radio base station controller 1 controls radio base station device 2, and further, stores in a buffer (not shown) data frames addressed to portable telephones 5i (where i = 1-j) that have been received from mobile communication exchange 4 and transmits the data frames to radio base station device 2.

When the data rate is not being limited by notification from radio base station device 2, radio base station controller 1 transmits to radio base station device 2, at the desired data rate, data frames that have been addressed to portable telephones 5i (i = 1-j) and that have been stored. Upon being notified of the value of a data rate from radio base station device 2, radio base station controller 1 lowers the data rate to the data rate of the value that has been notified. Radio base station controller 1 then transmits the data frames to radio base station device 2 at the reduced data rate.

Radio base station device 2 is both interconnected with radio base station controller 1 by way of lub 3 and connected wirelessly to portable telephones 5i (where i = 1-j). Radio base station device 2 receives data frames from radio base station controller 1 and transmits the data frames to portable telephones 5i (where i = 1-j).

Radio base station device 2 further monitors congestion on lub 3 by means of a CRC error check of data frames addressed to each portable telephone 5i (where i = 1-j). Radio base station device 2 calculates the reduced data rate for each portable telephone 5i (where i = 1-j) in order to reduce the data rates of all portable telephones 5i (where i = 1-j) that are currently communicating data and notifies radio base station controller 1.

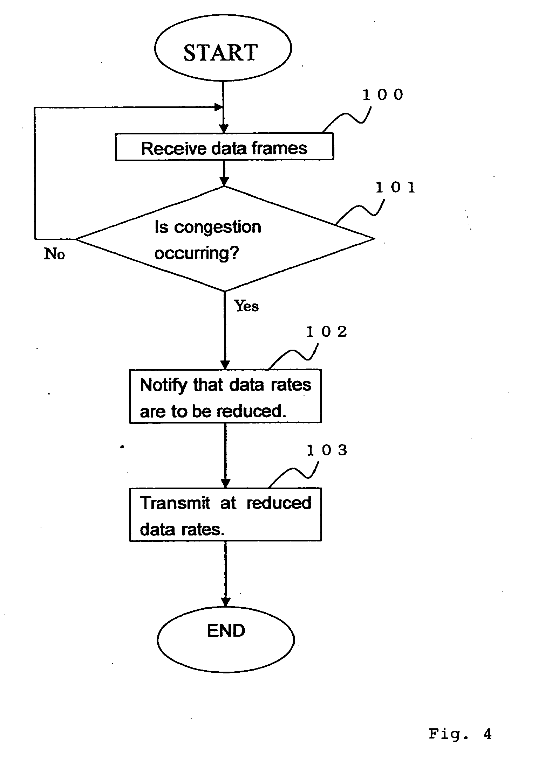

FIG. 4 is a flow chart showing the operation of the communication system in an exemplary embodiment. Radio base station device 2 both receives data frames from radio base station controller 1 at the desired data rate for transmission to portable telephones 5i (where i = 1-j) and monitors the congestion on lub 3 (Step 100).

If no congestion is occurring on lub 3, radio base station device 2 returns to Step 100. If congestion is occurring on lub 3, radio base station device 2 calculates a reduced data rate value for each portable telephone 5i (where i = 1-j) (Step 101). Radio base station device 2 then reports the calculated values of the data rates to radio base station controller 1 (Step 102).

Upon being notified of the data rate values from radio base station device 2, radio base station controller 1 reduces the data rate of all portable telephones 5i (where i = 1-j) engaged in data communication to the data rate values that have been notified and then transmits data frames addressed to portable telephones 5i (where i = 1-j) at the reduced data rates. (Step 103)

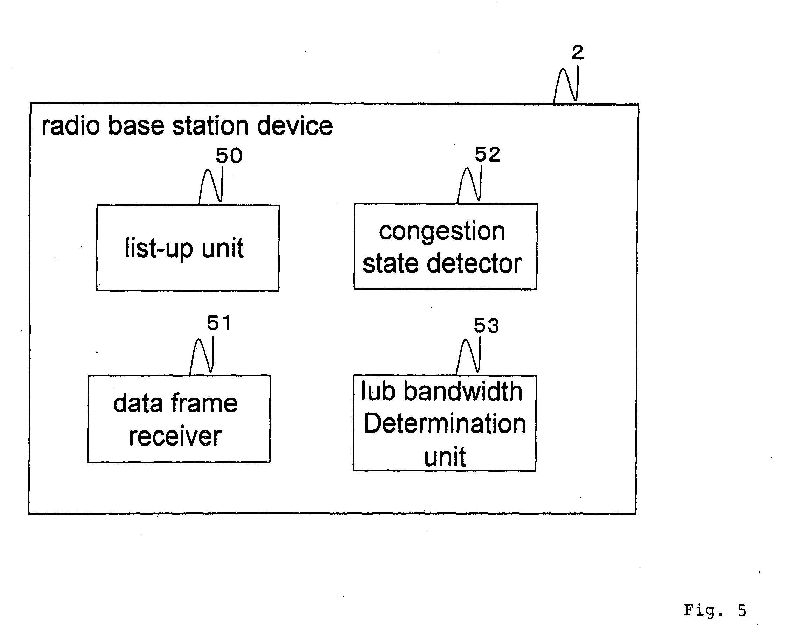

FIG. 5 is a block diagram showing the configuration of radio base station device 2 in an exemplary embodiment. Radio base station device 2 includes list-up unit 50, data frame receiver 51, congestion state detector 52, and lub bandwidth determination unit 53.

List-up unit 50 lists up i, n, and αi and refers to the last assigned number i to calculate sum total j. The value αi (i = 1-j) is the proportion of reduction of the data rate of portable telephone 5i (where i = 1-j) and is a decimal equal to or greater than 0 but no greater than 1. In addition, n is the preceding HS-DSCH (High-Speed Downlink Shared CHannel) credits. The current HS-DSCH credit is the amount of data that can be transferred per prescribed time interval from radio base station controller 1, and is calculated by multiplying αi (i = 1-j) with n. Data frame receiver 51 receives data frames from radio base station controller 1 and transmits them to congestion state detector 52.

Congestion state detector 52 monitors congestion on lub 3. Upon receiving data frames from data frame receiver 51, congestion state detector 52 carries out a CRC error check in portable telephone 5i units (where i = 1-j)'.

Congestion state detector 52 detects congestion on lub 3 by measuring the error rate by means of the CRC error check and thus determines that congestion is occurring. If congestion state detector 52 determines that congestion is occurring, congestion state detector 52 notifies lub bandwidth determination unit 53.

Upon receiving notification from congestion state detector 52, lub bandwidth determination unit 53 calculates the data rate values after the data rate has been reduced in all portable telephone 5i (where i = 1-j) that are in the process of data communication for the purpose of reducing the data rate of portable telephones 5i (where i = 1-j) that are communicating data. Upon being notified from congestion state detector 52, lub bandwidth determination unit 53 multiplies αi (i = 1-j) and n and calculates the reduced data rate value for each portable telephone 5i (where i = 1-j). Iub bandwidth determination unit 53 rounds off each calculated data rate value to the maximum integer that does not exceed the calculated data rate value or to the minimum integer that is greater than the calculated data rate value and notifies radio base station controller 1.

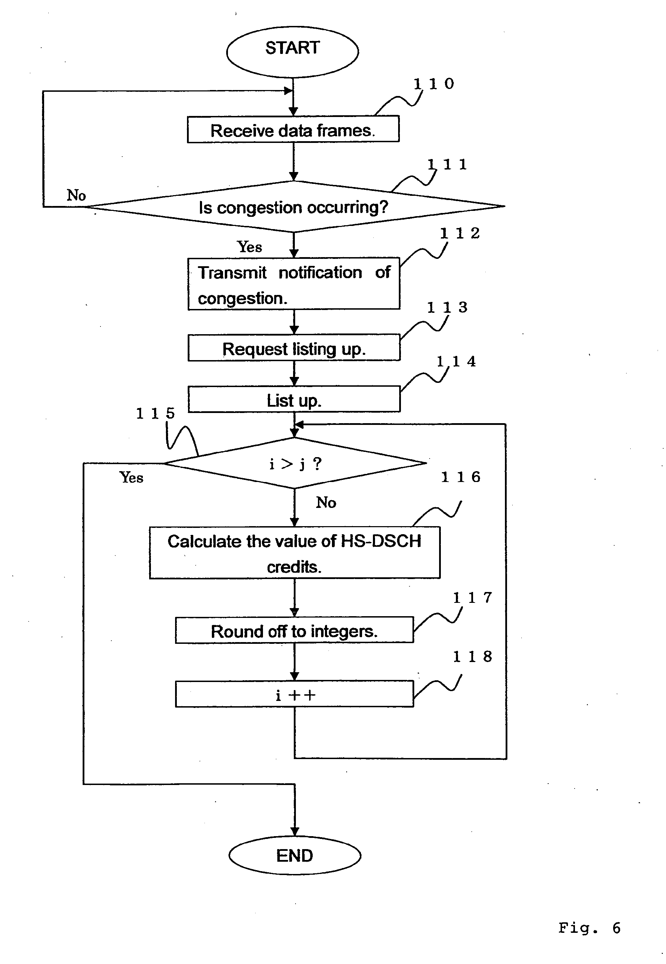

FIG. 6 is a flow chart showing the operation of radio base station device 2 that implements fair control for all portable telephones in an exemplary embodiment. Data frame receiver 51 receives data frames from radio base station controller 1 and transmits the data frames to congestion state detector 52. Upon receiving data frames from data frame receiver 51, congestion state detector 52 measures the error rate by means of a CRC error check of the data frames of each portable telephone 5i (where i = 1-j) to determine whether congestion is occurring on lub 3 (Step 111). If no congestion is occurring, the process returns to Step 110.

lf congestion is occurring, congestion state detector 52 notifies lub bandwidth determination unit 53 (Step 112). Upon receiving notification from congestion state detector 52, lub bandwidth determination unit 53 requests list-up unit 50 to list up portable telephones 5i (where i = 1-j) that are communicating data (Step 113). List-up unit 50, having received the request from lub bandwidth determination unit 53, lists up i, n and αi, and both rearranges the sequence such that i is in ascending order and then refers to the finally assigned number i to calculate the sum total j (Step 114).

Iub bandwidth determination unit 53 next successively compares i and j to determine whether to reduce the data rate of portable telephones 5i that are communicating data (Step 115). If i is greater than j, this means that the data rates of all portable telephones 5i that are communicating data have been reduced, and lub bandwidth determination unit 53 ends the process.

If i is equal to or lower than j, this means that the data rates of all portable telephones 5i that are communicating data have not been reduced, and lub bandwidth determination unit 53 therefore multiplies αi with n to calculate the value of HS-DSCH credits (Step 116). Iub bandwidth determination unit 53 next rounds off each calculated value to the maximum integer that does not exceed the calculated value or to the smallest integer that is greater than the calculated value (Step 117). In order to reduce the data rates of other portable telephones 5i, lub bandwidth determination unit 53 counts up i and returns to Step 115 (Step 118).

According to the present embodiment as described hereinabove, based on the results of error detection carried out for each of a plurality of portable telephones 5i (where i = 1-j), radio base station device 2 detects congestion of lub 3 with radio base station controller 1 that is shared by this plurality of portable telephones, reduces the data rates of portable telephones 5i (where i = 1-j) that have been selected regardless of which portable telephone 5i served as the stimulus for the detection of congestion, and is therefore able to exercise unbiased control over portable telephones that share lub 3.

In addition, upon detecting congestion of lub 3, radio base station device 2 selects all portable telephones 5i (where i = 1-j) that are communicating data through lub 3 and exercises control to reduce the data rates of all selected portable telephones 5i (where i = 1-j).

Although an example has been shown in the present embodiment in which unbiased control is exercised over all portable telephones, this exemplary embodiment is not limited to this form. As another embodiment, unbiased control may be effected over a prescribed number of portable telephones. In this case, upon detecting congestion on lub 3, radio base station device 2 implements control to reduce the data rates of a predetermined number of portable telephones 5i (where i = 1-k) that are communicating data through lub 3.

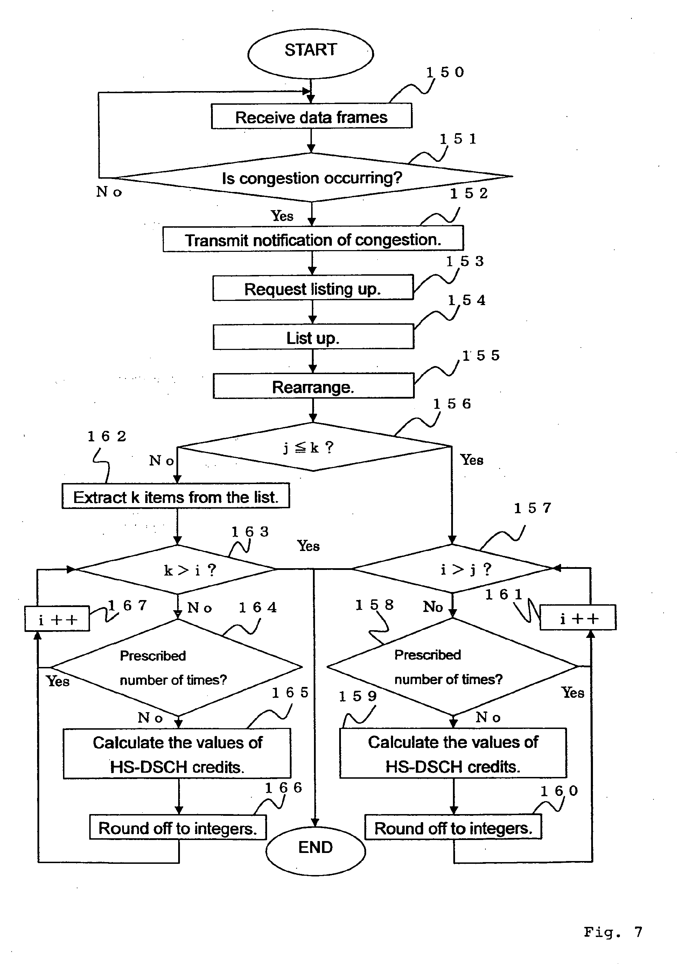

FIG. 7 is a flow chart showing the operation of radio base station device 2 that exercises unbiased control over a prescribed number of portable telephones in this other embodiment.

Data frame receiver 51 receives data frames from radio base station controller 1 and transmits them to congestion state detector 52. Upon receiving the data frames from data frame receiver 51, congestion state detector 52 measures the error rate by means of a CRC error check of the data frames of each portable telephone 5i (where i = 1-j) to determine whether or not congestion is occurring on lub 3 (Step 151). If no congestion is occurring on lub 3, the process returns to Step 150.

If congestion is occurring on lub 3, congestion state detector 52 sends notification to lub bandwidth determination unit 53 (Step 152). Upon receiving notification from congestion state detector 52, lub bandwidth determination unit 53 requests list-up unit 50 to list up i, n, and αi (Step 153).

List-up unit 50, having received the request from lub bandwidth determination unit 53, lists up i, n, and αi, and refers to i that has been assigned the lowest priority to calculate the sum total j (Step 154.) List-up unit 50 refers to i that have been listed up so that I is rearranged in ascending order (Step 155).

Iub bandwidth determination unit 53 compares sum total j with prescribed number k (Step 156).

If j is equal to or lower than k, the data rates of all portable telephones 5i (where i = 1-j) are to be reduced, and lub bandwidth determination unit 53 therefore compares i and j in sequence (Step 157). If i is greater than j, this means that the data rates of all portable telephones 5i (where i = 1-j) that are communicating data have been reduced, and lub bandwidth determination unit 53 therefore ends the process.

If i is equal to or lower than j, lub bandwidth determination unit 53 determines whether portable telephone 5i has had its data rate reduced a prescribed number of times or more within a fixed time interval (Step 158). If the data rate has been reduced a prescribed number of times or more within a fixed time interval, this means that the degree to which the data rate has been reduced is higher than other portable telephones, and lub bandwidth determination unit 53 therefore increments i and returns to Step 157 without calculating the value of the HS-DSCH credits.

If the data rate has not been reduced a prescribed number of times or more within a fixed time interval, the degree to which the data rate has been reduced is lower than other portable telephones, and lub bandwidth determination unit 53 therefore multiplies αi with n to calculate the value of HS-DSCH. credits (Step 159). Iub bandwidth determination unit 53 next rounds off the calculated value to the maximum integer that does not exceed the calculated value or to the minimum integer that is greater than the calculated value (Step 160). Iub bandwidth determination unit 53 then increments i and returns to Step 157 to reduce the data rate of other portable telephones 5i (Step 161).

If j is greater than k in the determination of Step 156, lub bandwidth determination unit 53 extracts the data of a prescribed number k of portable telephones 5i (where i = 1-k) from the top rank in the list that has been rearranged in ascending order (Step 162). Iub bandwidth determination unit 53 then compares k with i in order to determine whether the data rates of the prescribed number k of portable telephones 5i (where i = 1-k) have been reduced or not (Step 163). If k is greater than i, this means that the data rates of a prescribed number k of portable telephones 5i have been reduced, and lub bandwidth determination unit 53 therefore ends the process.

If k is equal to or less than i, lub bandwidth determination unit 53 determines whether portable telephone 5i (where i = 1) has had its data rate reduced a prescribed number of times or more within a fixed time interval (Step 164). If the data rate has been reduced a prescribed number of times or more within a fixed time interval, this means that the degree to which the data rate has been reduced is higher than other portable telephones, and lub bandwidth determination unit 53 therefore increments i and returns to Step 163 without calculating HS-DSCH credits.

If the data rate has not been reduced a prescribed number of times or more within a fixed time interval, this means that the degree to which the data rate has been reduced is lower than other portable telephones, and lub bandwidth determination unit 53 therefore multiplies αi with n to calculate the value of HS-DSCH credits (Step 165). Iub bandwidth determination unit 53 then rounds off the calculated value to the maximum integer that does not exceed the calculated value or to the minimum integer that is greater than the calculated value (Step 166). Iub bandwidth determination unit 53 then increments i and returns to Step 164 to reduce the data rates of other portable telephones 5i (Step 167).

As described in the foregoing explanation, according to the present embodiment, upon detecting congestion on lub 3, radio base station device 2 selects a predetermined number of portable telephones 5i (where i = 1-k) that are communicating data through lub 3 and implements control to reduce the data rates of the selected portable telephones 5i (where i = 1-k).

Further, if radio base station device 2 has reduced the data rate of a portable telephone a prescribed number of times or more within a fixed time interval, this means that the degree to which the data rate has been reduced is higher than in other portable telephones, and portable telephones having a high degree of data rate reduction may be excluded as targets for data rate reduction. Accordingly, when control for reducing the data rate is generated a plurality of times, reduction of the data rate can be prevented from being biased toward specific portable telephones.

In addition, priority may be assigned for transmitting data frames to portable telephones, and the radio base station device may thus select portable telephones in sequence starting with portable telephones having low priority to implement control for reducing the data rate of data addressed to portable telephones.

In this way, a radio base station device is able to maintain the same data rate as before detection of congestion for portable telephones having high priority.

The radio base station device selects all of said plurality of radio communication terminals as the targets for data rate reduction.

The radio base station device selects a predetermined number of radio communication terminals as the targets for data rate reduction.

While preferred embodiments of the present invention have been described using specific terms, such description is for illustrative purposes only, and it is to be understood that changes and variations may be made without departing from the spirit or scope of the following claims.

## Claims

1. A mobile communication system for transmitting data to radio communication terminals by way of transmission lines and radio lines, said mobile communication system comprising:
a radio base station device that is connected to said transmission lines, that is connected to a plurality of said radio communication terminals by said radio lines, that both transmits to each of said plurality of radio communication terminals data addressed to said plurality of radio communication terminals that have been received from said transmission lines shared with said plurality of radio communication terminals and monitors congestion of said transmission lines based on error measurement of said data that have been received from said transmission lines for each of said radio communication terminals, and upon detecting congestion of said transmission lines based on the results of error measurement of data addressed to any radio communication terminal, selects, by a method that does not depend on which radio communication terminal provided the stimulus for detecting said congestion, radio communication terminals for which the data rate is to be reduced from among said plurality of radio communication terminals; and
a radio base station controller that is connected to said radio base station device by way of said transmission lines, and that, when transmitting to said radio base station device data addressed to said plurality of radio communication terminals through said transmission lines at a first data rate, reduces the data rate to said radio communication terminals that have been selected by said radio base station device from said first data rate to a second data rate when congestion of said transmission lines has been detected at said radio base station device.

2. The mobile communication system according to claim 1, wherein said radio base station device selects all of said plurality of radio communication terminals as the targets for data rate reduction.

3. The mobile communication system according to claim 1, wherein said radio base station device selects a predetermined number of radio communication terminals as the targets for data rate reduction.

4. The mobile communication system according to claim 3, wherein:
priority relating to data communication is conferred on each of said plurality of radio communication terminals; and
when said radio base station device selects radio communication terminals for reducing the data rate, said radio base station device make a selection from among radio communication terminals for which said priority is low.

5. The mobile communication system according to claim 3 or claim 4, wherein said radio base station device excludes, from targets for data rate reduction, radio communication terminals for which the data rate has been reduced a prescribed number of times or more within a prescribed time interval before the detection of congestion.

6. The mobile communication system according to any one of claim 1 to claim 5, wherein said radio base station device calculates said second data rate based on said first data rate for said radio communication terminals that have been selected as targets for data rate reduction and reports said second data rate to said radio base station controller.

7. A radio base station device for transmitting by way of radio lines to radio communication terminals data received by way of transmission lines from a radio base station controller, said radio base station device comprising:
a receiver for receiving data addressed to a plurality of radio communication terminals from said transmission lines that are shared by said plurality of radio communication terminals;
a congestion detector for monitoring congestion of said transmission lines based on error measurement of said data that are received by said receiver for each of said radio communication terminals; and
a bandwidth controller for, upon detecting congestion of said transmission line based on results of error measurement of data addressed to any radio communication terminal in said congestion detector, using a method that does not depend on which radio communication terminal provided the stimulus for detecting said congestion to select radio communication terminals for which data rates are to be reduced from among said plurality of radio communication terminals.

8. The radio base station device according to claim 7, wherein said bandwidth controller selects all of said plurality of radio communication terminals as the targets for data rate reduction.

9. The radio base station device according to claim 7, wherein said bandwidth controller selects a predetermined number of radio communication terminals as the targets for data rate reduction.

10. The radio base station device according to claim 9, wherein:
priority relating to data communication is conferred on each of said plurality of radio communication terminals; and
said bandwidth controller, when selecting radio communication terminals for reducing the data rate, selects radio communication terminals for which said priority is low.

11. The radio base station device according to claim 9 or claim 10, wherein said bandwidth controller excludes from targets for data rate reduction radio communication terminals for which the data rate has been reduced a prescribed number of times or more within a prescribed time interval before detection of congestion.

12. The radio base station device according to any one of claims 7 to 11, wherein said bandwidth controller calculates said second data rate based on said first data rate for said radio communication terminals that have been selected as targets for data rate reduction.

13. A congestion control method for controlling congestion of transmission lines in a mobile communication system for sending data addressed to a plurality of radio communication terminals from a radio base station controller to a radio base station device through transmission lines and for transmitting said data from said radio base station device to each of said radio communication terminals by radio lines; said congestion control method comprising:
monitoring congestion of said transmission lines based on error measurement, for each of said radio communication terminals, of said data received by said radio base station device from said transmission lines shared by said plurality of radio communication terminals;
upon the detection of congestion of said transmission lines based on results of error measurement of data addressed to any radio communication terminal, selecting radio communication terminals for data rate reduction among said plurality of radio communication terminals by a method that does not depend on which radio communication terminal provided the stimulus for detecting said congestion; and
reducing the data rate to said radio communication terminals that have been selected from a first data rate to a second data rate.

14. The congestion control method according to claim 13, wherein all of said plurality of radio communication terminals are selected as targets for data rate reduction.

15. The congestion control method according to claim 13, wherein a predetermined number of radio communication terminals are selected as targets for data rate reduction.

16. The congestion control method according to claim 15, wherein:
priority relating to data communication is conferred on each of said plurality of radio communication terminals; and
when radio communication terminals are selected for data rate reduction, radio communication terminals for which said priority is low are selected.

17. The congestion control method according to claim 15 or claim 16, wherein radio communication terminals for which the data rate has been reduced a prescribed number of times or more within a prescribed time interval before detection of congestion are excluded from targets for data rate reduction.

18. The congestion control method according to any one of claim 13 to claim 17, wherein said second data rate is calculated based on said first data rate for said radio communication terminals that have been selected as targets for data rate reduction.

19. A radio base station device for transmitting by way of radio lines to radio communication terminals data received by way of transmission lines from a radio base station controller, said radio base station device comprising:
receive means for receiving data addressed to a plurality of radio communication terminals from said transmission lines that are shared by said plurality of radio communication terminals;
congestion detect means for monitoring congestion of said transmission lines based on error measurement of said data that are received by said receive means for each of said radio communication terminals; and
bandwidth control means for, upon detecting congestion of said transmission line based on results of error measurement of data addressed to any radio communication terminal in said congestion detect means, using a method that does not depend on which radio communication terminal provided the stimulus for detecting said congestion to select radio communication terminals for which data rates are to be reduced from among said plurality of radio communication terminals.
